# EUROPÄISCHE PATENTSCHRIFT

(11) **EP 2 437 914 B1**
(45) Veröffentlichungstag und Bekanntmachung des Hinweises auf die Patenterteilung: **03.04.2013**
(21) Anmeldenummer: 10719616.4
(22) Anmeldetag: 05.05.2010
(51) Int. Cl.: B23Q 1/54

(54) **WERKZEUGMASCHINE MIT PARALLELKINEMATISCHEM ANTRIEB**
MACHINE TOOL HAVING PARALLEL KINEMATIC DRIVE
MACHINE-OUTIL À ENTRAÎNEMENT CINÉMATIQUE PARALLÈLE

(30) Priorität: 02.06.2009 CH 852092009; 23.07.2009 US 228147 P; 24.11.2009 CH 18062009
(43) Veröffentlichungstag der Anmeldung: 11.04.2012
(73) Patentinhaber: Bystronic Laser AG, 3362 Niederönz (CH)
(72) Erfinder: PLÜSS, Christoph, Burgdorf 3400 (CH)
(74) Vertreter: Patentbüro Paul Rosenich AG
(86) Internationale Anmeldenummer: PCT/IB2010/051971
(87) Internationale Veröffentlichungsnummer: WO 2010/140071

(56) Entgegenhaltungen:
- EP-A1- 1 228 838
- WO-A-03/106115
- WO-A1-2005/120780
- DE-A1- 19 525 482
- US-A1- 2004 211 284
- US-B1- 6 402 444

## Beschreibung

Die Erfindung betrifft eine Werkzeugmaschine mit zumindest einem Stab, an dem ein Bearbeitungskopf angeordnet ist, und zumindest zwei Antrieben.

Werkzeugmaschinen werden nach dem Stand der Technik zum überwiegenden Teil mit seriell-kinematischem Antrieb ausgestattet, bei dem ein Bearbeitungskopf auf in Serie aneinander gereihten Schlitten in mehreren Achsen bewegt werden kann. Ein Beispiel ist eine Graviermaschine, bei welcher eine Brücke in x-Richtung und ein daran angeordneter Bearbeitungskopf in y-Richtung bewegt werden kann.

In geringerer aber steigender Zahl werden Werkzeugmaschinen auch mit parallelkinematischem Antrieb ausgestattet. Hier wird ein Bearbeitungskopf über mehrere, direkt auf diesen wirkende, Aktoren bewegt. Ein bekannter, wenngleich auch sehr komplexer Vertreter der Parallelkinematik ist ein sogenannter "Hexapod", bei dem sechs in der Länge veränderliche Beine eine Bewegung einer daran angebrachten Plattform oder eines daran angebrachten Bearbeitungskopfes in allen sechs Freiheitsgraden ermöglicht.

Aus dem Stand der Technik sind aber auch weniger komplexe Vorrichtungen bekannt, insbesondere solche, welche eine Bewegung eines Bearbeitungskopfes zulassen, welche sich im wesentlichen auf eine Ebene beschränkt.

Beispielsweise zeigt die DE 102 03 011 A1 dazu eine Werkzeugmaschine mit einer Parallelkinematik, bei der ein rotierendes Werkzeug über zwei Schwenkarme mit auf zwei parallelen Schienen verfahrbaren Schlitten verbunden ist.

Die DE 100 45 176 A1 offenbart weiterhin eine Werkzeugmaschine zur spanenden Bearbeitung von Werkstücken, bei der die Spindel über einen Kopplungsmechanismus und Schwenkarme gelenkig angeordnet ist. Serielle und parallele Kinematik werden hier kombiniert angewandt.

Die DE 199 02 867 A1 zeigt darüber hinaus eine mehrachsige Parallelstabkinematik, bei denen die Schlitten, an denen Gelenksarme montiert sind, auf einer oder auch mehreren parallelen Schiene(n) verfahrbar sind.

Die DE 198 60 925 A1 zeigt eine Stabkinematik, bei der mehrere Schlitten, an denen Gelenksarme angebracht sind, auf einer Schiene verfahrbar sind.

Schliesslich zeigt die WO 02/085580 A1 eine Vielzahl von Stabkinematiken für einen Roboter, bei dem die Stäbe mit Schlitten verbunden sind, die auf einer Schiene verfahren.

Aus der DE -A- 195 25 482 ist eine Werkzeugmaschine bekannt, umfassend - einen ersten Antrieb, welcher an einer ersten Position gelenkig mit einem ersten Stab verbunden ist, - einen zweiten Antrieb , der an einer weiteren ersten Position mit einem zweiten Stab verbunden ist, welcher gelenkig mit dem ersten Stab verbunden ist, - einen Bearbeitungskopf , der mit dem ersten Stab an einer dritten Position , welche von den ersten Positionen beabstandet ist, verbunden ist, und mit Hilfe der Stäbe (S1, S2) ausschliesslich in einer Ebene bewegbar ist, wobei die Antriebe (3a, 3b) derart ausgestaltet sind, dass die ersten Positionen entlang von in der besagten Ebene liegenden oder parallel zu der besagten Ebene verlaufenden Bahn bewegt werden können.

Obwohl nach dem Stand der Technik augenscheinlich viele Vertreter der Parallelkinematik bekannt sind, fehlt es dennoch an einer einfachen, aber zugleich überzeugenden Lösung für eine Werkzeugmaschine, bei der sich der Bearbeitungskopf ausschliesslich oder im Wesentlichen in einer Ebene bewegt. Besonders nachteilig an den bekannten Lösungen ist, dass der Stabantrieb des Bearbeitungskopfes relativ viel Raum benötigt

Die der vorliegenden Erfindung zugrunde liegende Aufgabe besteht nun darin, eine verbesserte Werkzeugmaschine anzugeben, insbesondere eine, bei welcher der vom Bearbeitungskopf erfasste Bereich im Vergleich zum vom Stabantrieb benötigten Raum relativ gross ist.

Erfindungsgemäss wird diese Aufgabe durch eine Werkzeugmaschine mit den Merkmalen des Patentanspruchs 1 gelöst.

Durch diese Massnahme wird insbesondere erreicht, dass der vom Bearbeitungskopf erfassbare Bereich im Vergleich zum vom Stabantrieb benötigten Raum relativ gross ist. Die Erfindung liefert damit einen wertvollen Beitrag zum Stand der Technik, denn Maschinen werden in aller Regel in einer Halle aufgestellt, die umso grösser sein muss je grösser der Raumbedarf für die genannte Parallelstabkinematik ist. Neben erhöhten Errichtungskosten für die Halle ist auch ein erhöhter Energiebedarf für dieselbe nötig.

In einer vorteilhaften Variante umfasst die Werkzeugmaschine:
- zumindest einen ersten und einen zweiten Stab, die an je einer ersten Position mit je einem Antrieb gelenkig verbunden sind,
- ein Gelenk, welches von den ersten Positionen beabstandet ist und die beiden Stäbe an einer zweiten Position gelenkig miteinander verbindet,
- einen Bearbeitungskopf, der mit zumindest dem ersten Stab an einer dritten Position, welche von den ersten Positionen beabstandet ist, verbunden ist, und mit Hilfe der Stäbe in einer Ebene bewegbar ist, wobei
- die Antriebe der Stäbe derart ausgestaltet sind, dass ein gegenseitiges Passieren der zumindest zwei Stäbe an zumindest einer vierten Position, welche zwischen einer ersten und der zweiten Position liegt, möglich ist. Vorteilhaft ist an dieser Variante, dass kein Drehschubgelenk vorgesehen werden muss, sondern mit einfachen Drehgelenken das Auslangen gefunden werden kann. Drehgelenke sind mechanisch relativ einfach aufgebaut und weisen sehr wenig Spiel auf, weswegen der Bearbeitungskopf relativ spielfrei bewegt werden kann. Zudem liegt dieser Variante der Erfindung auch die Einsicht zu Grunde, dass durch Ermöglichen des gegenseitigen Passierens der Stäbe der Platzbedarf einer Werkzeugmaschine deutlich reduziert werden kann.

In einer vorteilhaften Variante umfasst die Werkzeugmaschine:
- einen ersten Stab, der an einer ersten Position mit einem ersten Antrieb gelenkig und an einer zweiten Position über ein Drehschubgelenk mit einem zweiten Antrieb verbunden ist,
- einen Bearbeitungskopf, der mit dem ersten Stab an einer dritten Position, welche von der ersten und zweiten Position beabstandet ist, verbunden ist, und mit Hilfe des Stabs in einer Ebene bewegbar ist, wobei
- die Antriebe des ersten Stabs derart ausgestaltet sind, dass die erste und zweite Position unabhängig voneinander bewegt werden können.
Diese Variante der Erfindung ist sehr einfach aufgebaut, da nur ein einziger Stab für die Bewegung des Bearbeitungskopfes benötigt wird. Da hier Stäbe einander nicht kreuzen (im Gegensatz zu der zuletzt vorgestellten Variante) besteht auch keine Gefahr, dass Gegenstände oder gar Körperteile unbeabsichtigt zwischen den Stäben eingeklemmt werden. Der Betrieb dieser Werkzeugmaschine ist somit relativ sicher. Zudem weist diese Variante der erfindungsgemässen Werkzeugmaschine nur wenige Lagerstellen auf, weswegen der Bearbeitungskopf mehr oder minder spielfrei bewegt werden kann.

Weitere vorteilhafte Ausgestaltungen und Weiterbildungen der Erfindung ergeben sich aus den Unteransprüchen sowie aus der Beschreibung in Zusammenschau mit den Figuren der Zeichnung.

Vorteilhaft ist es, wenn zumindest ein Antrieb für die Bewegung der ersten Position oder der zweiten Position zumindest eines Stabes entlang einer Geraden vorgesehen ist. In diesem Fall wird ein Stab durch einen Linearantrieb oder Linearmotor angetrieben. Hierfür sind prinzipiell mannigfaltige Möglichkeiten bekannt, zum Beispiel Pneumatikzylinder, Hydraulikzylinder, Spindelantriebe oder über Seilzüge verschiebbare Schlitten. Selbstverständlich können an dieser Stelle nicht alle denkbaren Antriebe aufgeführt werden, weswegen die obenstehende Aufzählung lediglich als Illustration zu verstehen ist.

Vorteilhaft ist es dabei, wenn mehrere oder alle Stäbe über Linearantriebe angetrieben werden, insbesondere wenn die ersten Positionen der Stäbe auf zueinander parallelen Geraden bewegt werden. Dies ist eine besonders übersichtliche Anordnung der Linearantriebe.

Besonders vorteilhaft ist es dabei weiterhin, wenn die Geraden in Richtung einer Drehachse des Gelenks deckungsgleich sind. Dies ist eine ebenfalls übersichtliche Anordnung der Linearantriebe und überdies vorteilhaft für eine optimale Ausnutzung des verfügbaren Platzes.

Vorteilhaft ist es weiterhin, wenn zwei Antriebe für die Bewegung der ersten Positionen von zumindest zwei Stäben entlang zweier, paralleler Geraden vorgesehen sind und für die zumindest zwei Antriebe ein gemeinsamer Messstab für die Bestimmung der Position eines Antriebs auf der jeweiligen Geraden vorgesehen ist. Bei dieser Anordnung tasten Sensoren, die an den Antrieben angebracht sind, einen einzigen Messstab ab. Dadurch können Versatzfehler zwischen den zwei Antrieben, so wie diese bei Verwendung von zwei unterschiedlichen Messstäben, die unbeabsichtigt gegeneinander verschoben werden, vorkommen kann, vermieden werden. Darüber hinaus kann durch Verwendung bloss eines Messstabes, die vergleichsweise aufwändig hergestellt werden und damit teuer sind, eine massgebliche Einsparung erzielt werden. In Betracht kommen hierfür beispielsweise an sich bekannte optische und magnetische Abtastsysteme. Der Vorteil dieser Variante tritt besonders dann hervor, wenn die Werkzeugmaschine mehrere Bearbeitungsköpfe, die sich einen Messstab "teilen", umfasst. Vorteilhaft ist es gleichermassen, wenn zumindest zwei Antriebe für die Bewegung der ersten und zweiten Position des Stabes entlang zweier, paralleler Geraden vorgesehen sind und für die zumindest zwei Antriebe ein gemeinsamer Messstab für die Bestimmung der Position eines Antriebs auf der jeweiligen Geraden vorgesehen ist. Im Wesentlichen ergeben sich hier die gleichen Vorteile wie bei der zuletzt genannten Variante, jedoch für einen Stab, der an zwei Positionen direkt angetrieben ist.

Vorteilhaft ist es auch, wenn für die Antriebe Primärteile von Linearmotoren vorgesehen sind, welche auf einem gemeinsamen Sekundärteil verfahren. Aus dem Stand der Technik sind viele Arten von Linearmotoren bekannt, die zum Teil aufwändige Sekundärteile (der stillstehende Teil des Linearmotors) benötigen. Beispielsweise werden für den einer Synchronmaschine entsprechenden Linearantrieb (beim Wicklungsläuferprinzip) viele aneinandergereihte Permanentmagnete für den Sekundärteil benötigt, was diesen teuer macht. Erfindungsgemäss können sich nun mehrere Primärteile (der bewegte Teil des Linearmotors), die beim Wicklungsläuferprinzip im Wesentlichen aus Spulen bestehen, teilen.

An dieser Stelle wird darauf hingewiesen, dass die Verwendung nur eines Messstabes und/oder nur eines Sekundärteiles für mehrere Bearbeitungsköpfe auch dann vorteilhaft ist, wenn die Antriebe mehrerer Bearbeitungsköpfe auf einer gemeinsamen Geraden bewegt werden. Zwar können dann die Stäbe einander nicht passieren, aber die Einsicht, dass ein einziger Messstab von den Antrieben mehrerer Bearbeitungsköpfe genutzt werden kann, kann die Basis für eine unabhängige Erfindung bilden.

Vorteilhaft ist es auch, wenn zumindest ein Antrieb für die Bewegung der ersten Position oder der zweiten Position zumindest eines Stabes entlang einer Kreisbahn vorgesehen ist. Anstelle eines Linearantriebs wird hier ein Drehantrieb vorgesehen. Beispielsweise wird die erste Position eines Stabes mit einem Kurbelzapfen einer Scheibe oder einem drehbaren Stab verbunden. Als Antriebe kommen wiederum pneumatische Antriebe, hydraulische Antriebe und Elektromotoren in Betracht, insbesondere Schrittmotoren. Auch hier gilt, dass die obenstehende Aufzählung lediglich als Illustration zu verstehen ist.

Vorteilhaft ist es, wenn die dritte Position von der zweiten Position beabstandet ist. Unter Umständen kann die Anordnung des Bearbeitungskopfes beim Gelenk konstruktive Probleme aufwerfen. Bei dieser Variante ist der Bearbeitungskopf jedoch nicht beim Gelenk angeordnet, sodass die erwähnten Probleme vermieden werden können.

Vorteilhaft ist es auch, wenn der Abstand zwischen dritter und erster Position des ersten Stabes grösser als der Abstand zwischen zweiter und erster Position des ersten Stabes ist. In diesem Fall führen schon geringe Auslenkungen an den ersten Positionen zu vergleichsweise grossen Auslenkungen an der dritten Position. Mit anderen Worten bedeutet dies, dass der Bearbeitungskopf mit relativ langsamen Antrieben schnell bewegt werden kann. Dies reduziert wiederum die Taktzeiten für die hergestellten Werkstücke.

Vorteilhaft ist es auch, wenn der Abstand zwischen dritter und erster Position des ersten Stabes kleiner als der Abstand zwischen zweiter und erster Position des ersten Stabes ist. In diesem Fall führen vergleichsweise grosse Auslenkungen an den ersten Positionen zu vergleichsweise kleinen Auslenkungen an der dritten Position. Mit anderen Worten bedeutet dies, dass der Bearbeitungskopf mit relativ ungenauen Antrieben relativ genau bewegt werden kann, da natürlich auch Fehler am Antrieb, wie zum Beispiel Lagerspiel und Messungenauigkeiten, nur wenig Auswirkungen am Bearbeitungskopf haben. Daher können auch relativ einfach aufgebaute und damit billige Antriebe verwendet werden, ohne Genauigkeitseinbussen hinnehmen zu müssen.

Vorteilhaft ist es weiterhin, wenn zumindest ein Stab aus Aluminium und/oder Kunststoff gefertigt ist. Die sind vergleichsweise leichte und dennoch feste Materialien, welche sich deswegen gut für die genannten Stäbe eignen, die mitunter hohen Beschleunigungen und damit hohen Beschleunigungskräften ausgesetzt sind. Als Kunststoffe kommen insbesondere Glasfaser- und Kohlefaserverstärkte Kunststoffe (GFK und CFK) in Betracht. Durch die Leichtbauweise können wegen der geringen Massen auch mit relativ kleinen Kräften hohe Beschleunigungen erzielt werden. Dies ist insbesondere dann von Vorteil, wenn für die eigentliche Bearbeitung verschiedene Positionen angefahren werden müssen, zum Beispiel beim Bohren oder Schneiden von Löchern.

Vorteilhaft ist es auch, wenn die Werkzeugmaschine zumindest zwei Bearbeitungsköpfe umfasst, die jeweils an einem von zumindest zwei ersten Stäben angebracht sind. In diesem Fall werden also zwei und mehr Bearbeitungsköpfe vorgesehen, die sich unabhängig voneinander bewegen lassen. Auf diese Weise können mehrere Werkstücke gleichzeitig oder eines gleichzeitig an verschiedenen Stellen bearbeitet werden.

Vorteilhaft ist es, wenn die Werkzeugmaschine als Laserbearbeitungsmaschine ausgebildet ist.
Laserschneidemaschinen eignen sich deswegen besonders gut für die Erfindung weil beim Schneiden keine Kräfte vom Werkstück auf den Bearbeitungskopf rückwirken und die Maschine daher vergleichsweise fragil gestaltet werden kann. Daraus resultieren wiederum hohe mögliche Beschleunigungen. Auch sind die Antriebsköpfe beabstandet zum Bearbeitungskopf, sodass sie weniger anfällig für Verschmutzung sind. Besonders vorteilhaft ist es, wenn zum Schneiden ein Faserlaser eingesetzt wird, das dieser wegen seiner guten Eignung für das Laserschneiden sehr gut mit einem schnellen Antrieb nach Art der Erfindung harmonisiert. Der Faserlaser eignet sich insbesondere für das sehr schnelle Schneiden von dünnen Blechen bis etwa 5 mm Blechstärke.

Dasselbe gilt für alle Strahlbearbeitungsmaschinen, also Brennschneidemaschinen, Plasmaschneidemaschinen und Wasserstrahlbearbeitungsmaschinen. Die Erfindung kann also auch für dies Typen von Maschinen vorteilhaft eingesetzt werden.

Vorteilhaft ist es schliesslich, wenn der Laserstrahl und/oder ein Schneidgas im Inneren des ersten, hier hohlen, Stabes geführt sind. Bei dieser Variante wird der Laserstrahl von einer (fixen) Quelle über das Innere des ersten Stabs zum Bearbeitungskopf geführt. Am Ende des Stabs werden bei einer einfachen Ausführungsform nur relativ wenige zusätzliche Bauelemente benötigt (z.B. Umlenkspiegel, Optik, Düse), sodass in Verbindung mit einem aus Aluminium oder Kunststoff gefertigten und insbesondere nur dünnwandigen Stab ein sehr geringes Gewicht der gesamten Mechanik erzielt werden kann. Trotz hoher Beschleunigungen wirken wegen der geringen Masse nur geringe Kräfte, die vergleichsweise einfach beherrscht werden können. Auf diese Weise ist eine sehr schnelle Laserbearbeitungsmaschine realisierbar. Bei der Verwendung von Faserlasern können zusätzliche Elemente wie Spiegel und dergleichen überhaupt entfallen, allerdings sind die einzuhaltenden Mindest-Biegeradien für den Faserlaser zu berücksichtigen. Gegebenenfalls ist es vorteilhaft oder erforderlich, den Faserlaser zumindest teilweise ausserhalb des Stabes zu führen, beispielsweise wenn dieser mit ausladendem Bogen von der horizontalen in die vertikale Richtung übergeführt wird.

Abschliessend wird festgehalten, dass sich die Erfindung, auch wenn deren Eignung für Strahlbearbeitungsmaschinen (z.B. Laserschneid- und -schweissmaschinen sowie Wasserstrahlschneidmaschinen) besonders hervorgehoben wurde, natürlich auch für viele andere Arten von Maschinen eignet.
Beispielsweise kann die Erfindung für Fräs- und Bohrmaschinen, Schweiss- und Lötmaschinen, Bestückungsautomaten (insbesondere für elektronische Schaltungen) und viele andere Arten von Maschinen, die hier aus verständlichen Gründen nicht im Einzelnen angeführt werden können, angewendet werden. Der Fachmann wird aber die hier offenbarte Lehre ohne Mühe auf die ihm vorliegende Aufgabenstellung adaptieren können.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispiele näher erläutert. Es zeigen dabei:
- Fig. 1a: eine erste schematisch dargestellte Variante der Erfindung bei der die Stäbe entlang paralleler Geraden bewegt werden;
- Fig. 1b: eine zweite schematisch dargestellte Variante der Erfindung bei der die Stäbe entlang einer einzigen Geraden bewegt werden;
- Fig. 2: eine dritte schematisch dargestellte Variante der Erfindung bei der die Stäbe entlang zweier gekreuzter Geraden bewegt werden;
- Fig. 3: eine vierte schematisch dargestellte Variante der Erfindung bei der die Stäbe entlang von Kreisbahnen bewegt werden;
- Fig. 4a: einen Platzbedarf einer Stabkinematik nach dem Stand der Technik;
- Fig. 4b: einen Platzbedarf einer erfindungsgemässen Stabkinematik;
- Fig. 5: eine Laserbearbeitungsmaschine mit einer erfindungsgemässen Parallelkinematik;
- Fig. 6: eine Laserbearbeitungsmaschine mit zwei Bearbeitungsköpfen;
- Fig. 7: eine erfindungsgemässe Parallelkinematik mit drei Stäben;
- Fig. 8: eine erfindungsgemässe Parallelkinematik mit ineinander geschachtelten Stäben;
- Fig. 9: ein Detail einer Laserbearbeitungsmaschine mit einem einzigen Messstab;
- Fig. 10: eine Anordnung, bei der ein Laserstrahl und ein Schneidgas durch das Innere eines Stabes geführt wird;
- Fig. 11: eine konkretes Beispiel einer erfindungsgemässen Laserschneidemaschine mit einem Bearbeitungskopf in Schrägansicht;
- Fig. 12: die Laserschneidemaschine aus Fig. 11 in Seitenansicht;
- Fig. 13: eine konkretes Beispiel einer erfindungsgemässen Laserschneidemaschine mit zwei Bearbeitungsköpfen in Schrägansicht;
- Fig. 14: die Laserschneidemaschine aus Fig. 13 aus einem anderen Blickwinkel;
- Fig. 15: die Laserschneidemaschine aus Fig. 13 von oben gesehen;
- Fig. 16: eine schematisch dargestellte Variante der Erfindung bei der ein Stab entlang paralleler Geraden bewegt wird;
- Fig. 17: eine weitere schematisch dargestellte Variante der Erfindung bei der ein Stab entlang zweier gekreuzter Geraden bewegt wird;
- Fig. 18: eine weitere schematisch dargestellte Variante der Erfindung bei der ein Stab entlang von Kreisbahnen bewegt wird;
- Fig. 19: eine Seitenansicht einer erfindungsgemässen Anordnung, bei welcher die Führungsschiene in einer Ebene angeordnet sind;
- Fig. 20: eine Seitenansicht einer erfindungsgemässen Anordnung, bei welcher die Führungsschiene in verschiedenen Ebene angeordnet sind.

In den Figuren der Zeichnung sind gleiche und ähnliche Teile mit gleichen Bezugszeichen und funktionsähnliche Elemente und Merkmale - sofern nichts Anderes ausgeführt ist - mit gleichen Bezugszeichen aber unterschiedlichen Indizes versehen.

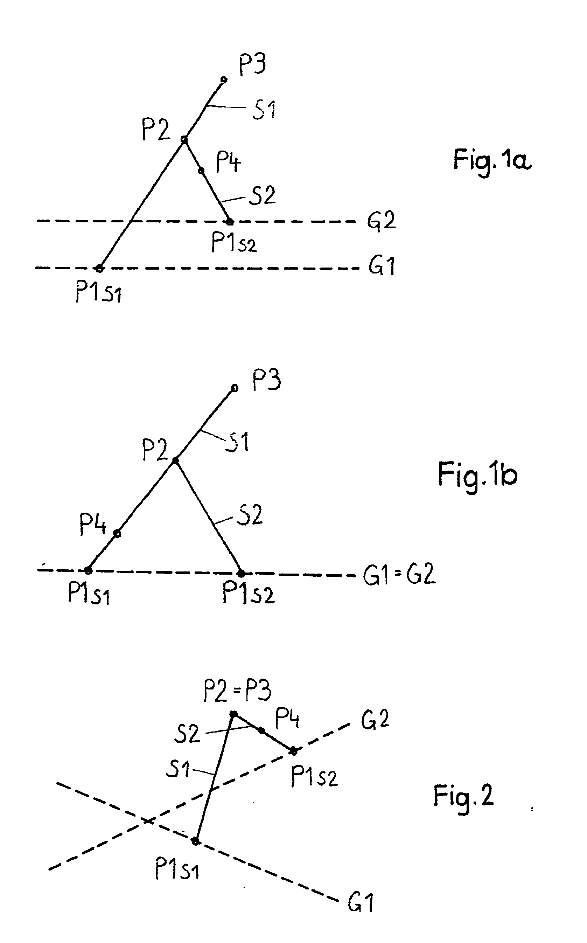

Fig. 1a zeigt eine erste schematisch dargestellte Variante der Erfindung, bei der ein erster Stab S1 an einer ersten Position P1_{S1} (hier am Stabende) auf einer ersten Geraden G1 bewegt wird. Analog wird ein zweiter Stab S2 an einer ersten Position P1_{S2} (hier ebenfalls am Stabende) auf einer zweiten Geraden G2 bewegt. Die beiden Stäbe S1 und S2 sind an einer zweiten Position P2 über ein Gelenk gelenkig miteinander verbunden. An einer dritten Position P3 befindet sich ein nicht dargestellter Bearbeitungskopf. Werden nun die ersten Positionen P1_{S1} und P1_{S2} der beiden Stäbe S1 und S2 bewegt (z.B. über Linearmotoren) dann wird - wie leicht einsehbar ist - auch die dritte Position P3 mit dem Bearbeitungskopf bewegt.

Mit Hilfe einer entsprechenden Steuerung, welche entweder in Software, Hardware oder einer Kombination der beiden ausgeführt sein kann, kann die Position P3 eine beliebige Bahn beschreiben.

Erfindungsgemäss existiert nun zumindest eine vierte Position P4 zwischen der zweiten Position P2 und einer ersten Position P1_{S1} und P1_{S2}, an der ein gegenseitiges Passieren der zumindest zwei Stäbe S1 und S2 möglich ist. Die in der Fig. 1a dargestellte vierte Position P4 stellt dabei nur eine von vielen Möglichkeiten dar.

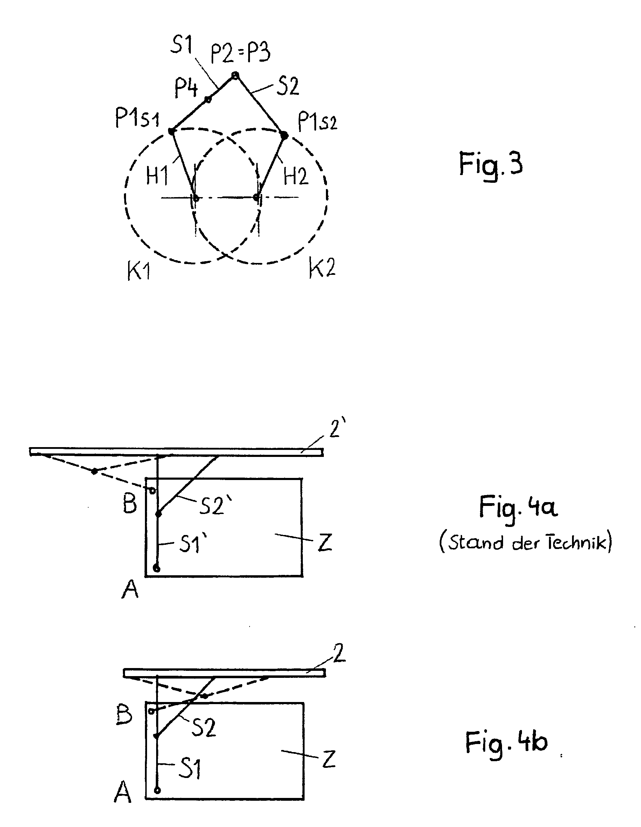

In der Fig. 1a sind die beiden Geraden G1 und G2 parallel und beabstandet dargestellt. Dies ist keinesfalls zwingend für die Erfindung. Vielmehr können die Geraden G1 und G2 deckungsgleich sein (siehe auch Fig. 1b) oder auch winkelig zueinander (siehe auch Fig. 3).

Fig. 1b zeigt eine Anordnung, die der in der Fig. 1a dargestellten Anordnung sehr ähnlich ist. Allerdings sind die beiden Geraden G1 und G2 hier nicht parallel sondern deckungsgleich, sodass gilt G1=G2. Weiterhin befindet sich die beispielhafte vierte Position P4 nicht am zweiten Stab S2 sondern am ersten Stab S1.

Fig. 2 zeigt eine Anordnung, die der in der Fig. 1a dargestellten Anordnung sehr ähnlich ist. Lediglich die beiden Geraden G1 und G2 sind hier nicht parallel sondern in einem Winkel zueinander angeordnet und der Bearbeitungskopf befindet sich auf der Höhe des Gelenks, sodass gilt P2=P3. Prinzipiell ändert dies an der Erfindung nur wenig, es muss lediglich die Bahnberechnung an die veränderten kinematischen Umstände angepasst werden.

Fig. 3 zeigt nun schematisch eine alternative Ausführungsform der Erfindung. Hier erfolgt der Antrieb der ersten Positionen P1_{S1} und P2_{S2} nicht auf Geraden G1 und G2 sondern auf Kreisbahnen K1 und K2. In diesem Beispiel sind hierfür stilisierte Hebel H1 und H2 vorgesehen, die jeweils um einen Drehpunkt gedreht werden können, sodass die ersten Positionen P1_{S1} und P2_{S2} die Kreisbahnen K1 und K2 beschreiben. Auch hier existiert eine vierte Position P4, an der ein gegenseitiges Passieren der zumindest zwei Stäbe S1 und S2 möglich ist. Die dritte Position P3 kann durch entsprechende Steuerung der Antriebe wiederum eine beliebige Bahn innerhalb des Arbeitsbereichs abfahren.

Fig. 4a zeigt nun, wie eine entsprechende Stabkinematik nach dem Stand der Technik ausgeführt wurde. Hier ist ein Passieren der Stäbe S1' und S2', so wie es die Erfindung vorsieht, nicht möglich. Wird das dargestellte Rechteck als Arbeitsbereich Z für den Bearbeitungskopf vorgesehen, dann kragt die Schiene 2', auf denen die Antriebe der Stäbe S1' und S2' verfahren, deutlich über diesen aus. Bei mitunter sehr grossen Blechformaten bedeutet dies einen erheblichen Platzbedarf in einer Produktionshalle. Beispielhaft sind zwei Positionen A und B dargestellt, welche ein nicht dargestellter Bearbeitungskopf während der Bearbeitung des Werkstücks anfahren soll.

Fig. 4b zeigt nun eine erfindungsgemässe Stabkinematik mit demselben Arbeitsbereich Z und denselben anzufahrenden Positionen A und B. Wie aus der Fig. 4b erkennbar ist, ragt die Führungsschiene 2 nun nicht oder nur unwesentlich über den Arbeitsbereich hinaus und ermöglicht dennoch ein Anfahren der Positionen A und B. Es leuchtet ein, dass damit der Platzbedarf für eine entsprechende Werkzeugmaschine deutlich reduziert werden kann.

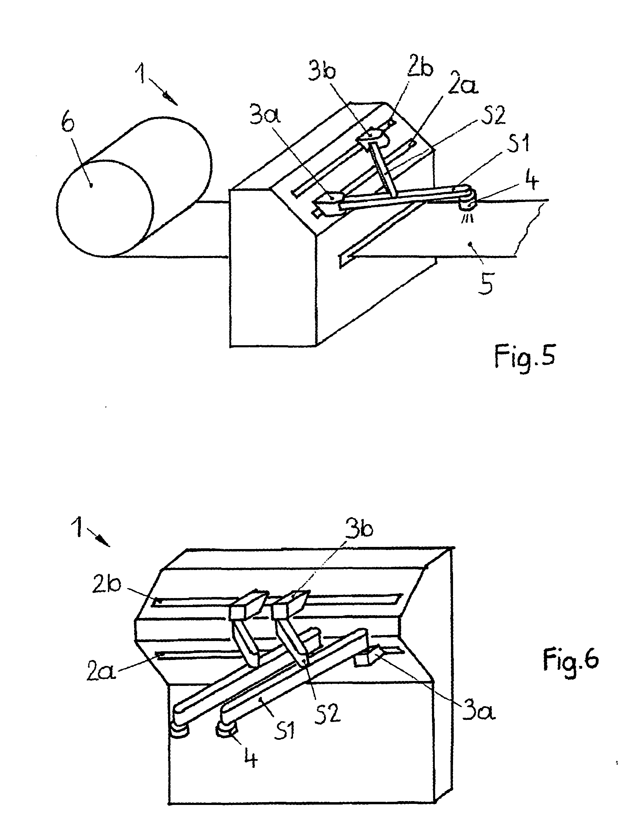

Fig. 5 zeigt nun eine praktische Ausführungsform der bisher eher theoretisch dargestellten Erfindung anhand einer Laserbearbeitungsmaschine 1, hier einer Laserschneidemaschine. Vorab wird festgehalten, dass dieser konkrete Maschinentyp nur als Beispiel dient, um die Erfindung näher erläutern zu können. Die Erfindung kann aber in analoger Weise auf andere Maschinentypen angewandt werden. Um nur einige zu nennen, seien hier Bohr- und Fräsmaschinen, Bestückungsautomaten, Schweiss- und Lötautomaten, Laserschweiss- und Graviermaschinen sowie Wasserstrahlschneidmaschinen und dergleichen genannt.

Laserbearbeitungsmaschinen sind Werkzeugmaschinen, die mit Hilfe eines hochenergetischen Laserstrahls Materialien bearbeiten. Das Anwendungsgebiet umfasst eine Vielzahl an Fertigungsverfahren wie Trennen, Ändern von Stoffeigenschaften oder Urformen. Im Detail werden Laserbearbeitungsmaschinen zum Schneiden, Gravieren, Schweissen, Wärmebehandeln, Randschichthärten und Beschichten, sowie für volumenaufbauende Verfahren eingesetzt. Das Spektrum der bearbeitbaren Werkstoffe umfasst alle Metalle, Kunststoffe, Glas, Keramik, Stein, Holz, Textilien und Papier. Häufig wird gleichzeitig zu der Einwirkung des Laserstrahls auch ein Schneidgas auf die Bearbeitungsstelle geblasen, um die Bearbeitung zu verbessern.

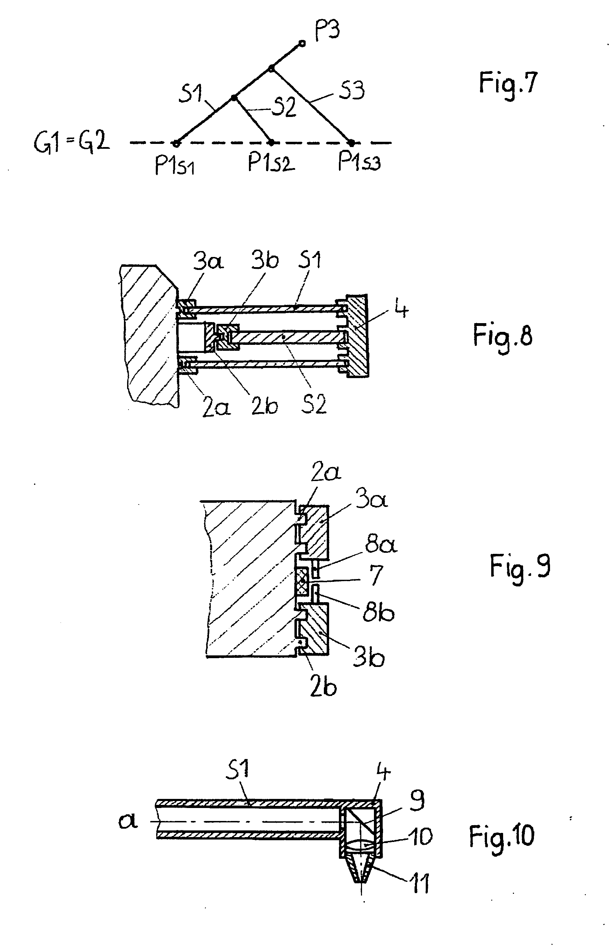

Die Laserbearbeitungsmaschine 1 umfasst zwei parallele Führungsschienen 2a und 2b auf denen zwei Antriebsköpfe 3a und 3b linear verfahren werden können. Die Antriebsköpfe 3a und 3b können dabei beispielsweise über nicht dargestellte Pneumatikzylinder, Hydraulikzylinder, Spindelantriebe oder Seilzüge bewegt werden. Durch die Anordnung der Führungsschienen 2a und 2b in zwei Ebenen können die mit den Antriebsköpfen 3a und 3b verbundenen Stäbe S1 und S2 bewegt werden. Am Ende des ersten Stabs S1 befindet sich ein Laserbearbeitungskopf 4. Da im vorliegenden Beispiel angenommen wird, dass der erste Stab S1 hohl ist und der Laserstrahl durch denselben geführt wird, besteht der Laserbearbeitungskopf 4 im Wesentlichen aus Umlenkspiegel, Optik und Schneiddüse (siehe hierzu auch Fig. 9). In einer vorteilhaften Ausgestaltung wird zusätzlich oder alternativ Schneidgas durch den hohlen Stab S1 geblasen.

Aus der Darstellung wird rasch klar, dass sich die Länge des ersten Stabes S1 nicht ändert, egal wo die dritte Position P3 auch hinbewegt wird. Aus diesem Grund kann ein Faltenbalg, so wie dieser häufig für Laserbearbeitungsmaschinen verwendet wird, welche nach dem seriell-kinematischen Prinzip aufgebaut sind, entfallen.

Zusätzlich zur Laserbearbeitungsmaschine 1 ist ein zu bearbeitendes Blech 5 dargestellt, dass im vorliegenden Fall von einer Rolle 6 abgewickelt wird, sodass die Produktion von Werkstücken quasi kontinuierlich erfolgen kann. Selbstverständlich ist die Erfindung aber auch auf einzelne Blechtafeln anwendbar, die in den Arbeitsbereich verbracht werden.

An dieser Stelle wird auch angemerkt, dass die Erfindung selbstverständlich nicht auf eine bestimmte Form des Rohmaterials oder eine bestimmte Art des Rohmaterials limitiert ist. Neben den erwähnen metallischen Blechen können daher auch Tafeln aus Holz, Glas, Stein, Kunststoff und dergleichen bearbeitet werden. Darüber hinaus ist das Rohmaterial keineswegs auf die Tafelform beschränkt. Vielmehr bezieht sich die Erfindung auch auf andere Umrisse (z.B. Kreise, Ovale, Dreiecke und komplexere Formen) sowie auf Rohmaterialien, die eine Tiefe aufweisen. Beispielsweise können vorgefertigte Schalen oder Kisten mit Hilfe des Laserstrahls graviert werden.

Fig. 6 zeigt nun eine weitere Ausführungsform der Erfindung, die sich von der in der Fig. 5 dargestellten Ausführungsform nur insofern unterscheidet, als hier zwei Bearbeitungsköpfe 4 anstatt nur eines Bearbeitungskopfes 4 vorgesehen sind. Diese Maschine 1 kann also zwei Werkstücke zur selben Zeit herstellen oder ein Werkstück an zwei verschiedenen Stellen bearbeiten. Im Optimalfall geht damit eine Halbierung der Produktionszeit einher.

Die beiden Bearbeitungsköpfe 4 können dabei mit Einschränkungen unabhängig voneinander bewegt werden. Durch entsprechende Planung und Programmierung des Produktionsprozesses kann dieser Nachteil stark reduziert werden. Denkbar ist natürlich auch, für jeden Bearbeitungskopf 4 je zwei Führungsschienen 2a, 2b vorzusehen, um deren Bewegung völlig unabhängig voneinander gestalten zu können.

Fig. 7 zeigt weiterhin, dass die Erfindung nicht auf zwei Stäbe S1 und S2 limitiert ist, sondern auch auf mehr Stäbe, hier drei Stäbe S1, S2 und S3, ausgedehnt werden kann. Ein dritter Stab S3 kann dabei zur Stabilisierung der Konstruktion beitragen, was insbesondere dann von Vorteil ist, wenn die einzelnen Stäbe S1, S2 und S3 aus Gewichtsgründen nur sehr fragil ausgestaltet sind. Dabei können alle drei Stäbe S1, S2 und S3 angetrieben werden oder es wird einer davon lediglich geschleppt.

Fig. 8 zeigt, dass die Stäbe S1 und S2 nicht nur übereinander angeordnet werden können, so wie dies in den Figuren 5 und 6 der Fall ist, sondern auch ineinander angeordnet sein können. Fig. 8 zeigt dazu eine Seitenansicht einer entsprechenden Anordnung, bei der die erste Führungsschiene 2a direkt mit dem Maschinenkörper verbunden ist und die zweite Führungsschiene 2b über eine brückenartige Konstruktion mit diesem verbunden ist. Auch hier können die Stäbe S1 und S2, die ineinander angeordnet sind, einander passieren.

Fig. 9 zeigt eine weitere Detailansicht einer Laserbearbeitungsmaschine 1, bei welcher die Führungsschienen 2a und 2b sowie die darauf verfahrbaren Antriebsköpfe 3a und 3b auf einer senkrechten Fläche des Maschinenkörpers übereinander angeordnet sind. Dazwischen befindet sich ein einziger Messstab 7, welcher von den Sensoren 8a und 8b abgetastet wird. Ein unerwünschter Versatz der beiden Antriebsköpfe 3a und 3b resultierend aus einem Messfehler, welcher auf Ungenauigkeiten zweier getrennter Messstäben basiert, kann so vermieden werden. Die Laserbearbeitungsmaschine 1 ist damit genauer.

Fig. 10 zeigt schliesslich wie der Laserstrahl und ein Schneidgas entlang einer Achse a durch den ersten Stab S1 geführt wird. Am Ende des ersten Stabes S1 befindet sich der Bearbeitungskopf 4 mit einem Umlenkspiegel 9, einer Linse 10 und einer Düse 11. Der Bearbeitungskopf 4 ist in diesem Fall einstückig mit dem ersten Stab S1 ausgeführt, was aber keinesfalls zwingend ist. Der Laserbearbeitungskopf 4 ist hier stark vereinfacht dargestellt. Vorstellbar sind daher auch komplexere Konstruktionen. Als Laser kann beispielsweise ein CO₂-Laser eingesetzt werden. Denkbar und vorteilhaft ist aber auch der Einsatz eines Faserlasers. Wenn der Faserlaser nach unten gebogen wird, um den Laserstrahl an die Bearbeitungsstelle zu führen, kann der Umlenkspiegel 9 entfallen. In diesem Fall kann der Faserlaser den ersten Stab S1 auch nach oben hin durchbrechen und in weitem Bogen in eine Richtung vertikal nach unten übergeführt werden, um eventuell vorgeschriebene Mindestbiegeradien einhalten zu können. Selbstverständlich ist es aber auch möglich, den Faserlaser in horizontaler Richtung enden zu lassen, und das Lasersicht wie in Fig. 10 dargestellt mit Hilfe des Umlenkspiegels 9 an die Bearbeitungsstelle zu führen.

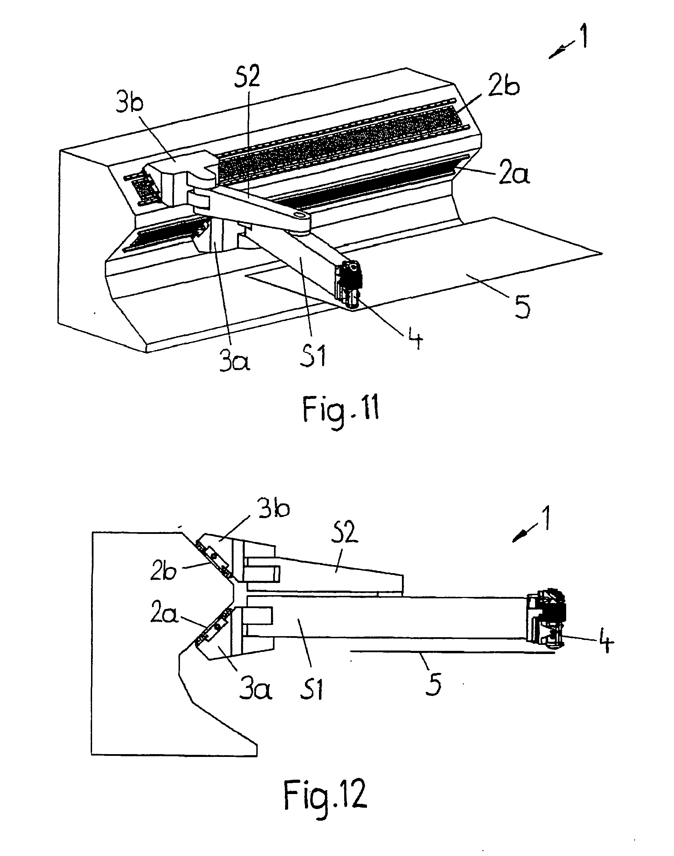

Die Figuren 11 und 12 zeigen ein erstes konkretes Beispiel einer erfindungsgemässen Laserschneidemaschine 1 mit einem Bearbeitungskopf 4 in Schrägansicht (Fig. 11) und in Seitenansicht (Fig. 12), welche der in Fig. 5 dargestellten Laserschneidemaschine 1 sehr ähnlich ist. Gut zu erkennen ist der Aufbau der Führungsschienen 2a und 2b. Zwischen den eigentlichen Führungen für die Antriebsköpfe 3a und 3b befinden sich dicht aneinandergereihte Permanentmagnete des Sekundärteils eines Linearmotors. In den Antriebsköpfen 3a und 3b selbst (Primärteile) befinden sich die Antriebsspulen (nicht dargestellt).

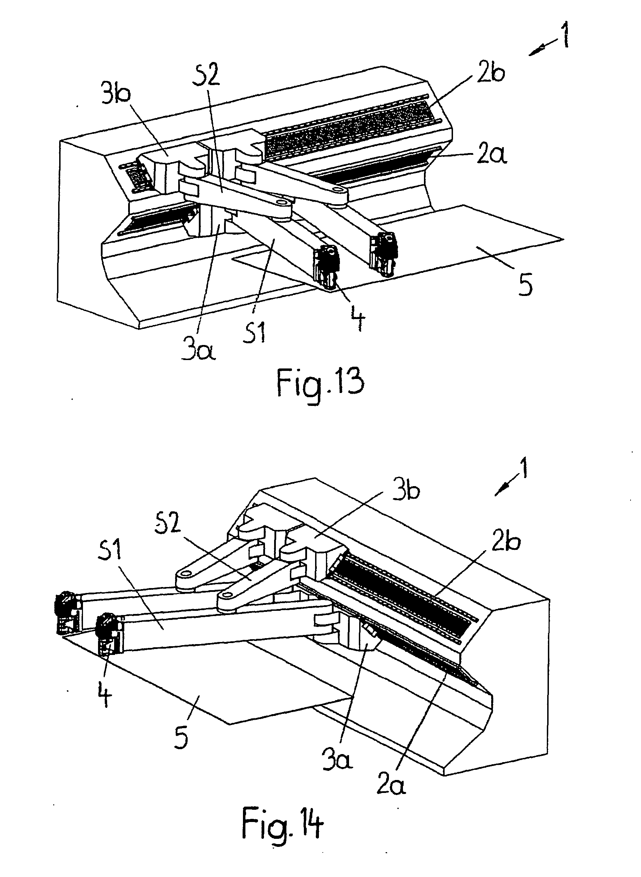

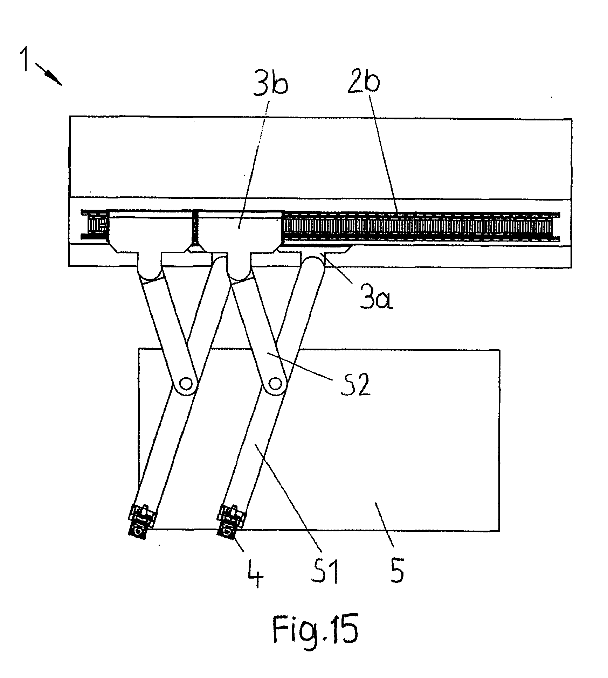

Die Figuren 13 bis 15 zeigen ein zweites konkretes Beispiel einer erfindungsgemässen Laserschneidemaschine 1 mit zwei Bearbeitungsköpfen 4 in Schrägansicht (Fig. 13 und 14) und in Draufsicht (Fig. 15), welche der in Fig. 6 dargestellten Laserschneidemaschine 1 sehr ähnlich ist. Wiederum gut zu sehen sind die Sekundärteile der Linearmotoren, die in diesem Beispiel von je zwei Antriebsköpfen 3a und 3b genutzt werden. Damit einher geht eine deutliche Reduzierung der Komplexität und der Herstellungskosten der Laserschneidemaschine 1.

Der Vollständigkeit halber wird darauf hingewiesen, dass die Erfindung natürlich nicht die Verwendung von geraden Stäben S1 und S2 erfordert, selbst wenn dies in den Figuren so dargestellt wurde. Vielmehr können für die Erfindung auch gekrümmte und abgeknickte Stäbe verwendet werden, sowie alle anderen Formen, soweit die kinematischen Anforderungen an die Erfindung erfüllt sind.

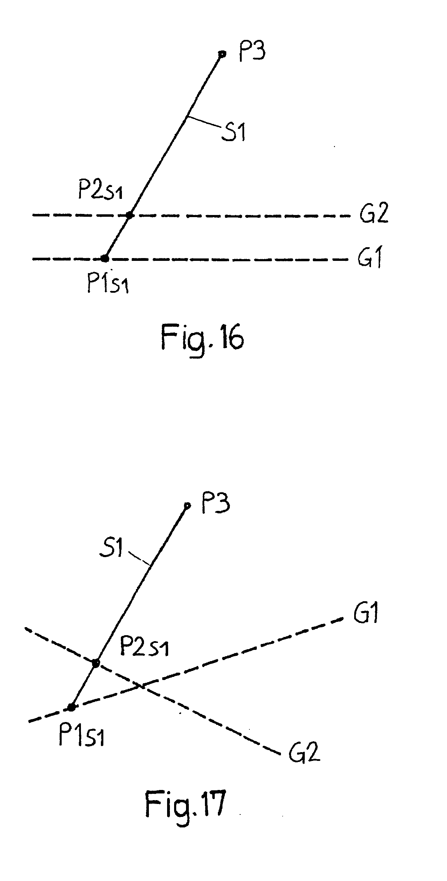

Fig. 16 zeigt eine Anordnung, welche der in Fig. 1 gezeigten Anordnung ähnlich ist. Auch hier verfahren zwei (nicht dargestellte) Antriebe entlang von zwei parallelen Geraden G1 und G2. Auf diese Weise können eine erste Position P1_{S1} am Stab S1 und eine davon beabstandete zweite Position P2_{S1} am Stab S1 unabhängig voneinander bewegt werden. Folglich kann ein am dritten Punkt P3 angeordneter Bearbeitungskopf (ebenfalls nicht dargestellt) in der Zeichenebene bewegt werden. Mit Hilfe einer entsprechenden Steuerung, welche entweder in Software, Hardware oder einer Kombination der beiden ausgeführt sein kann, kann die Position P3 eine beliebige Bahn beschreiben, beispielsweise den Umriss eines auszuschneidenden Werkstückes.

Fig. 17 zeigt eine Anordnung, welche der in Fig. 2 gezeigten Anordnung ähnlich ist. Hier verfahren die Antriebe entlang von zwei gekreuzten Geraden G1 und G2.

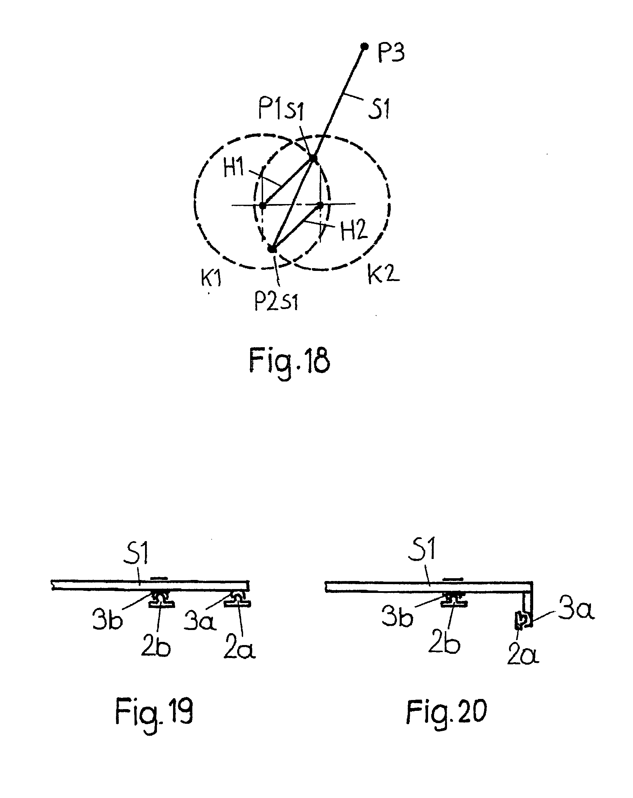

Fig. 18 zeigt eine Anordnung, welche der in Fig. 3 gezeigten Anordnung ähnlich ist. Auch hier werden die erste und die zweite Position P1_{S1} und P2_{S1} mit Hilfe von zwei Hebeln H1 und H2 entlang von Kreisbahnen K1 und K2 bewegt. Durch entsprechende Ansteuerung der Antriebe kann die dritte Position P3 wiederum in der Zeichenebene bewegt werden.

Fig. 19 zeigt eine Seitenansicht einer in Fig. 16 dargestellten Anordnung, bei welcher die Führungsschienen 2a und 2b in einer Ebene angeordnet sind. Auf ihnen verfahren die Antriebe 3a und 3b und bewegen so den Stab S1. Im dargestellten Beispiel ist beim zweiten Antrieb 3b ein Drehschubgelenk vorgesehen, welches sowohl eine Drehung des Stabes S1 um seine Hochachse als auch eine translatorische Bewegung entlang seiner Längsachse ermöglicht. Denkbar wäre jedoch auch, dass das Drehschubgelenk beim ersten Antrieb 3a vorgesehen ist.

Fig. 20 zeigt eine weitere Variante der Erfindung, welche der in Fig. 19 dargestellten Anordnung ähnlich ist. Bei dem vorliegenden Beispiel ist jedoch die erste Schiene 2a um ihre Längsachse gekippt. Über einen nicht näher bezeichneten Hebel wird eine Verbindung zum Stab S1 hergestellt. Insbesondere wenn die Schiene 2a vergleichseweise breit ist, kann diese Bauweise dazu beitragen, das Volumen oder die Grundfläche der Werkzeugmaschine zu verringern.

Weiterhin wird darauf hingewiesen, dass obwohl eine Bewegung in vertikaler Richtung des Arbeitskopfes 4 bis jetzt nicht berücksichtigt wurde, die Erfindung dennoch auch auf Werkzeugmaschinen bezogen ist, die eine solche Bewegung ermöglichen. Beispielsweise kann die Düse 11 des Bearbeitungskopfes 4 auch vertikal verschiebbar ausgeführt sein. Desgleichen kann der Bearbeitungskopf 4 beispielsweise bei einer Fräs- oder Bohrmaschine eine vertikal verfahrbare Spindel aufweisen. In diesem Fall wird das Werkzeug aus einer Mischung aus serieller und paralleler Kinematik bewegt.

### Bezugszeichenliste

- 1: Laserbearbeitungsmaschine
- 2, 2a, 2b: Führungsschiene
- 2': Führungsschiene nach dem Stand der Technik
- 3a, 3b: Antriebskopf
- 4: Bearbeitungskopf
- 5: Blech
- 6: Rolle
- 7: Messstab
- 8a, 8b: Sensor
- 9: Spiegel
- 10: Linse
- 11: Düse
- A: erste Position im Arbeitsbereich Z
- B: zweite Position im Arbeitsbereich Z
- G1, G2: Gerade
- H1, H2: Hebel
- K1, K2: Kreisbahn
- P1_{S1}.. P1_{S3}: erste Position
- P2, P2_{S1}: zweite Position
- P3: dritte Position
- P4: vierte Position
- S1: erster Stab
- S2: zweiter Stab
- S3: dritter Stab
- Z: Arbeitsbereich

## Patentansprüche

1. Werkzeugmaschine (1), umfassend
- einen ersten Antrieb (3a), welcher an einer ersten Position (P1_{S1}) gelenkig mit einem ersten Stab (S1) verbunden ist,
- einen zweiten Antrieb (3b), der a) an einer weiteren ersten Position (P1_{S3}) mit einem zweiten Stab (S2) verbunden ist, welcher gelenkig mit dem ersten Stab (S1) verbunden ist, oder der b) an einer zweiten Position (P2_{S1}) über ein Drehschubgelenk mit dem ersten Stab (S1) verbunden ist,
- einen Bearbeitungskopf (4), der mit dem ersten Stab (S1) an einer dritten Position (P3), welche im Fall a) von den ersten Positionen (P1_{S1}, P1_{S3}) und im Fall b) von der ersten und der zweiten Position (P1_{S1}, P2_{S1}) beabstandet ist,
verbunden ist, und mit Hilfe des Stabs (S1) beziehungsweise der Stäbe (S1, S2) ausschliesslich in einer Ebene bewegbar ist, wobei
die Antriebe (3a, 3b) derart ausgestaltet sind, dass im Fall a) die ersten Positionen (P1_{S1}, P1_{S3}) und im Fall b) die erste und zweite Position (P1_{S1}, P2_{S1}) unabhängig voneinander und entlang von in der besagten Ebene liegenden oder parallel zu der besagten Ebene verlaufenden Bahnen bewegt werden und einander kreuzen können.

2. Werkzeugmaschine (1) nach Anspruch 1, umfassend
- zumindest einen ersten und einen zweiten Stab (S1..S3), die an je einer ersten Position (P1_{S1}..P1_{S3}) mit je einem Antrieb (3a, 3b) gelenkig verbunden sind,
- ein Gelenk, welches von den ersten Positionen (P1_{S1}..P1_{S3}) beabstandet ist und die beiden Stäbe (S1..S3) an einer zweiten Position (P2) gelenkig miteinander verbindet,
- einen Bearbeitungskopf (4), der mit zumindest dem ersten Stab (S1) an einer dritten Position (P3), welche von den ersten Positionen (P1) beabstandet ist, verbunden ist, und mit Hilfe der Stäbe (S1..S3) ausschliesslich in einer Ebene bewegbar ist,
**wobei**
die Antriebe (3a, 3b) der Stäbe (S1..S3) derart ausgestaltet sind, dass ein gegenseitiges Passieren der zumindest zwei Stäbe (S1..S3) an zumindest einer vierten Position (P4) , welche zwischen einer ersten (P1_{S1}..P1_{S3}) und der zweiten Position (P2) liegt, möglich ist.

3. Werkzeugmaschine (1) nach Anspruch 1, umfassend
- einen ersten Stab (S1), der an einer ersten Position (P1_{S1}) mit einem ersten Antrieb (3a) gelenkig und an einer zweiten Position (P2_{S1}) über ein Drehschubgelenk mit einem zweiten Antrieb (3b) verbunden ist,
- einen Bearbeitungskopf (4), der mit dem ersten Stab (S1) an einer dritten Position (P3), welche von der ersten und zweiten Position (P1_{S1}, P2_{S1}) beabstandet ist, verbunden ist, und mit Hilfe des Stabs (S1) ausschliesslich in einer Ebene bewegbar ist,
**wobei**
dass die Antriebe (3a, 3b) des ersten Stabs (S1) derart ausgestaltet sind, dass die erste und zweite Position (P1_{S1}, P2_{S1}) unabhängig voneinander bewegt werden können.

4. Werkzeugmaschine (1) nach einem der Ansprüche 1 bis 3, **dadurch gekennzeichnet, dass** zumindest ein Antrieb (3a, 3b) für die Bewegung der ersten Position (P1_{S1}..P1_{S3}) oder der zweiten Position (P2_{S1}) zumindest eines Stabes (S1..S3) entlang einer Geraden (G1, G2) vorgesehen ist.

5. Werkzeugmaschine (1) nach Anspruch 4 und 2, **dadurch gekennzeichnet, dass** zumindest zwei Antriebe (3a, 3b) für die Bewegung der ersten Positionen (P1_{S1}..P1_{S3}) von zumindest zwei Stäben (S1..S3) entlang zweier, paralleler Geraden (G1, G2) vorgesehen sind und für die zumindest zwei Antriebe (3a, 3b) ein gemeinsamer Messstab (7) für die Bestimmung der Position eines Antriebs (3a, 3b) auf der jeweiligen Geraden (G1, G2) vorgesehen ist.

6. Werkzeugmaschine (1) nach Anspruch 4 und 3, **dadurch gekennzeichnet, dass** zumindest zwei Antriebe (3a, 3b) für die Bewegung der ersten und zweiten Position (P1_{S1}, P2_{S1}) des Stabes (S1) entlang zweier, paralleler Geraden (G1, G2) vorgesehen sind und für die zumindest zwei Antriebe (3a, 3b) ein gemeinsamer Messstab (7) für die Bestimmung der Position eines Antriebs (3a, 3b) auf der jeweiligen Geraden (G1, G2) vorgesehen ist.

7. Werkzeugmaschine (1) nach einem der Ansprüche 1 bis 6, **dadurch gekennzeichnet,** für die Antriebe (3a, 3b) Primärteile von Linearmotoren vorgesehen sind, welche auf einem gemeinsamen Sekundärteil verfahren.

8. Werkzeugmaschine (1) nach einem der Ansprüche 1 bis 3, **dadurch gekennzeichnet, dass** zumindest ein Antrieb (3a, 3b) für die Bewegung der ersten Position (P1_{S1}..P1_{S3}) oder der zweiten Position (P2_{S1}) zumindest eines Stabes (S1..S3) entlang einer Kreisbahn (K1, K2) vorgesehen ist.

9. Werkzeugmaschine (1) nach einem der Ansprüche 1 bis 8, **dadurch gekennzeichnet, dass** die dritte Position (P3) von der zweiten Position (P2, P2_{S1}) beabstandet ist.

10. Werkzeugmaschine (1) nach Anspruch 9, **dadurch gekennzeichnet, dass** der Abstand zwischen dritter (P3) und erster Position (P1_{S1}) des ersten Stabes (S1) grösser als der Abstand zwischen zweiter (P2, P2_{S1}) und erster Position (P1_{S1}) des ersten Stabes (S1) ist.

11. Werkzeugmaschine (1) nach Anspruch 9, **dadurch gekennzeichnet, dass** der Abstand zwischen dritter (P3) und erster Position (P1_{S1}) des ersten Stabes (S1) kleiner als der Abstand zwischen zweiter (P2, P2_{S1}) und erster Position (P1_{S1}) des ersten Stabes (S1) ist.

12. Werkzeugmaschine (1) nach einem der Ansprüche 1 bis 11, **dadurch gekennzeichnet, dass** zumindest ein Stab (S1..S3) aus Aluminium und/oder Kunststoff gefertigt ist.

13. Werkzeugmaschine (1) nach einem der Ansprüche 1 bis 12, **dadurch gekennzeichnet, dass** diese zumindest zwei Bearbeitungsköpfe (4) umfasst, die jeweils an einem von zumindest zwei ersten Stäben (S1) angeordnet sind.

14. Werkzeugmaschine (1) nach einem der Ansprüche 1 bis 13, **dadurch gekennzeichnet, dass** diese als Laserbearbeitungsmaschine (1) ausgebildet ist.

15. Laserbearbeitungsmaschine (1) nach Anspruch 14, **dadurch gekennzeichnet, dass** der Laser und/oder ein Schneidgas im Inneren des ersten Stabes (S1) geführt sind.

## Claims

1. Machine tool (1), comprising
- a first drive (3a), which at a first position (P1_{S1}) is connected in an articulated manner to a first rod (S1),
- a second drive (3b), which (a) is connected at a further first position (P1_{S3}) to a second rod (S2), which is connected to the first rod (S1) in an articulated manner, or which b) is connected at a second position (P2_{S1}) to the first rod (S1) by means of a cylindric joint,
- a machining head (4), which is connected to the first rod (S1) at a third position (P3), which in case a) is at a distance from the first positions (P1_{S1}, P1_{S3}) and in case b) is at a distance from the first and the second position (P1_{S1}, P2_{S1}), and can be moved exclusively in a plane by means of the rod (S1) or rods (S1, S2), wherein
the drives (3a, 3b) are designed in such a way that in case a) the first positions (P1_{S1}, P1_{S3}), and in case b) the first and the second position (P1_{S1}, P2_{S1}), can be moved independently of each other and along tracks lying in said plane or extending parallel to said plane, and can cross each other.

2. Machine tool (1) according to Claim 1, comprising
- at least one first and one second rod (S1..S3), which are each connected in an articulated manner at one first position (P1_{S1}..P1_{S3}) to one drive (3a, 3b) each,
- a hinged joint, which is spaced at a distance from the first positions (P1_{S1}..P1_{S3}) and which connects the two rods (S1..S3) in an articulated manner at a second position (P2),
- a machining head (4), which is connected to at least the first rod (S1) at a third position (P3), which is spaced at a distance from the first positions (P1) and can be moved exclusively in a plane by means of the rods (S1..S3),
wherein
the drives (3a, 3b) of the rods (S1.. S3) are designed such that a mutual passing of the at least two rods (S1..S3) is possible at at least one fourth position (P4), which is located between a first (P1_{S1}..P1_{S3}) and the second position (P2).

3. Machine tool (1) according to Claim 1, comprising
- a first rod (S1), which is connected at a first position (P1_{S1}) to a first drive (3a) in an articulated manner and at a second position (P2_{S1}) by means of a cylindric joint with a second drive (3b),
- a machining head (4), which is connected to the first rod (S1 at a third position (P3), which is at a distance from the first and second position (P1_{S1}, P2_{S1}), and can be moved exclusively in a plane by means of the rod (S1),
wherein
the drives (3a, 3b) of the first rod (S1) are designed such that the first and second position (P1_{S1}, P2_{S1}) can be moved independently of each other.

4. Machine tool (1) according to any one of Claims 1 to 3, **characterized in that** at least one drive (3a, 3b) is provided for moving the first position (P1_{S1}..P1_{S3}) or the second position (P2_{S1}) of at least one rod (S1..S3) along a straight line (G1, G2).

5. Machine tool (1) according to Claim 4 and 2, **characterized in that** at least two drives (3a, 3b) are provided for the movement of the first positions (P1_{S1}..P1_{S3}) of at least two rods (S1..S3) along two parallel straight lines (G1, G2), and a common measuring scale (7) is provided for the at least two drives (3a, 3b) for determining the position of a drive (3a, 3b) on the respective straight line (G1, G2).

6. Machine tool (1) according to Claim 4 and 3, **characterized in that** at least two drives (3a, 3b) are provided for the movement of the first and second position (P1_{S1}, P2_{S1}) of the rod (S1) along two parallel straight lines (G1, G2) and a common measuring scale (7) is provided for the at least two drives (3a, 3b) for determining the position of a drive (3a, 3b) on the respective straight line (G1, G2).

7. Machine tool (1) according to any ona of Claims 1 to 6, **characterized in that** for the drives (3a, 3b), primary sections of linear motors are provided which travel on a common secondary section.

8. Machine tool (1) according to any one of Claims 1 to 3, **characterized in that** at least one drive (3a, 3b) is provided for the movement of the first position (P1_{S1}..P1_{S3}) or of the second position (P2_{S1}) of at least one rod (S1..S3) along a circular path (K1, K2).

9. The machine tool (1) according to any one of Claims 1 to 8, **characterized in that** the third position (P3) is at a distance from the second position (P2, P2_{S1}).

10. Machine tool (1) according to Claim 9, **characterized in that** the distance between the third (P3) and first position (P1_{S1}) of the first rod (S1) is greater than the distance between the second (P2, P2_{S1}) and first position (P1_{S1}) of the first rod (S1).

11. Machine tool (1) according to Claim 9, **characterized in that** the distance between the third (P3) and first position (P1_{S1}) of the first rod (S1) is less than the distance between the second (P2, P2_{S1}) and first position (P1_{S1}) of the first rod (S1).

12. Machine tool (1) according to any one of Claims 1 to 11, **characterized in that** at least one rod (S1..S3) is manufactured from aluminium and/or plastic.

13. Machine tool (1) according to any one of Claims 1 to 12, **characterized in that** said machine tool comprises at least two machining heads (4), each of which is arranged on one of at least two first rods (S1).

14. Machine tool (1) according to any one of Claims 1 to 13, **characterized in that** said machine tool is implemented as a laser machining tool (1).

15. The laser machining tool (1) according to Claim 14, **characterized in that** the laser and/or a cutting gas are guided inside the first rod (S1).

## Revendications

1. Machine-outil (1) comprenant
- un premier mécanisme d'entraînement (3a) qui, dans une première position (P1_{S1}), est relié de façon articulée à une première barre (S1),
- un deuxième mécanisme d'entraînement (3b), qui a) dans une autre première position (P1_{S3}) est relié avec une deuxième barre (S2), laquelle est reliée de façon articulée avec la première barre (S1) ou qui b) dans une deuxième position (P2_{S1}) est relié à la première barre (S1) au moyen d'un joint articulé cylindrique,
- une tête d'usinage (4) qui est reliée à la première barre (S1) dans une troisième position (P3), laquelle dans le cas a) est maintenue à distance de la première position (P1_{S1}, P1_{S3}) et dans le cas b) de la première et de la deuxième position (P1_{S1}, P2_{S1}), et est mobile exclusivement dans un plan à l'aide de la barre (S1) ou des barres (S1, S2),
les mécanismes d'entraînement (3a, 3b) étant constitués de telle sorte que dans le cas a) les premières positions (P1_{S1}, P2_{S3}) et dans le cas b) la première et la deuxième position [P1_{S1}, P2_{S1}) peuvent être déplacées et se croiser réciproquement indépendamment l'une de l'autre et le long de trajectoires situées dans ledit plan ou passant parallèlement au dit plan.

2. Machine-outil (1) selon la revendication 1 comprenant
- au moins une première et une deuxième barre (S1..S3) qui sont reliées de façon articulée chacune à une première position (P1_{S1}..p1_{S3}) avec chaque mécanisme d'entraînement (3a, 3b),
- un joint articulé qui est distant des premières positions (P1_{S1}..P1_{S3}) et relie les deux barres (S1..S3) entre elles de façon articulée à une deuxième position (P2),
- une tête d'usinage (4) qui est reliée au moins à la première barre (S1) à une troisième position (P3) qui est distante de la première position (P1) et est mobile exclusivement dans un plan à l'aide des barres (S1..S3),
les mécanismes d'entraînement (3a, 3b) des barres (S1..S3) étant constitués de telle sorte qu'un passage réciproque d'au moins deux barres (S1..S3) est possible à au moins une quatrième position (P4) qui se situe entre une première position (P1_{S1}..P1_{S3}) et la deuxième position (P2).

3. Machine-outil (1) selon la revendication 1 comprenant
- une première barre (S1) qui est reliée de façon articulée à une première position (P1_{S1}) avec un premier mécanisme d'entraînement (3a) et à une deuxième position (P2_{S1}) par un joint articulé cylindrique avec un deuxième mécanisme d'entraînement (3b),
- une tête d'usinage (4) qui est reliée avec la première barre (S1) à une troisième position (P3) qui est distante de la première et de la deuxième position (P1_{S1}..P2_{S1}) et est exclusivement mobile dans un plan à l'aide de la barre (S1),
les mécanismes d'entraînement (3a, 3b) de la première barre (S1) étant constitués de telle sorte que la première et la deuxième position (P1_{S1,} P2_{S1}) peuvent être déplacées indépendamment l'une de l'autre.

4. Machine-outil (1) selon une quelconque des revendications 1 à 3 **caractérisée en ce qu'**au moins un mécanisme d'entraînement (3a, 3b) est prévu pour le mouvement de la première position (P1_{S1}..P1_{S3}) ou de la deuxième position (P2_{S1}) d'au moins une barre (S1..S3) le long d'une droite (G1, G2).

5. Machine-outil (1) selon les revendications 4 et 2 **caractérisée en ce qu'**au moins deux mécanismes d'entraînement (3a, 3b) sont prévus pour le mouvement des premières positions (P_{S1}..P1_{S3}) d'au moins deux barres (S1..S3) le long de deux droites parallèles (G1, G2) et **en ce qu'**une barre de mesure commune (7) est prévue pour au moins les deux mécanismes d'entraînement (3a, 3b) pour déterminer la position d'un mécanisme d'entraînement (3a, 3b) sur les droites respectives (G1, G2).

6. Machine-outil (1) selon les revendications 4 et 3 **caractérisée en ce qu'**au moins deux mécanismes d'entraînement (3a, 3b) sont prévus pour le mouvement de la première et de la deuxième position (P_{S1}, P2_{S1}) de la barre (S1) le long de deux droites (G1, G2) parallèles et **en ce qu'**une barre de mesure commune (7) pour au moins les deux mécanismes d'entraînement (3a, 3b) est prévue pour déterminer la position d'un mécanisme d'entraînement (3a, 3b) sur les droites respectives (G1, G2).

7. Machine-outil (1) selon une quelconque des revendications 1 à 6 **caractérisée en ce que** pour les mécanismes d'entraînement (3a, 3b) des pièces primaires de moteurs linéaires sont prévues qui passent sur une pièce secondaire commune.

8. Machine-outil (1) selon une quelconque des revendications 1 à 3 **caractérisée en ce qu'**au moins un mécanisme d'entraînement (3a, 3b) est prévu pour le mouvement de la première position (P1_{S1}..P1_{S3}) ou de la deuxième position (P2_{S1}) d'au moins une barre (S1..S3) le long d'une trajectoire circulaire (K1, K2).

9. Machine-outil (1) selon une quelconque des revendications 1 à 8 **caractérisée en ce que** la troisième position (P3) est distante de la deuxième position (P2, P2_{S1}).

10. Machine-outil (1) selon la revendication 9 **caractérisée en ce que** l'intervalle entre la troisième (P3) et la première position (P1_{S1}) de la première barre (S1) est plus grand que l'intervalle entre la deuxième (P2, P2_{S1}) et la première position (P1_{S1}) de la première barre (S1).

11. Machine-outil (1) selon la revendication 9 **caractérisée en ce que** l'intervalle entre la troisième (P3) et la première position (P1_{S1}) de la première barre (S1) est plus petit que l'intervalle entre la deuxième (P2, P2_{S1}) et la première position (P1_{S1}) de la première barre (S1).

12. Machine-outil (1) selon une quelconque des revendications 1 à 11 **caractérisée en ce qu'**au moins une barre (S1..S3) est fabriquée en aluminium et/ou en matière plastique.

13. Machine-outil (1) selon une quelconque des revendications 1 à 12 **caractérisée en ce que** celle-ci comprend au moins deux têtes d'usinage (4) qui sont respectivement disposées sur une au moins des deux premières barres (S1).

14. Machine-outil (1) selon une quelconque des revendications 1 à 13 **caractérisée en ce que** celle-ci est constituée comme une machine d'usinage au laser (1).

15. Machine d'usinage au laser (1) selon la revendication 14 **caractérisée en ce que** le laser et/ou gaz de coupe est guidé à l'intérieur de la première barre (S1).
